# EUROPÄISCHE PATENTSCHRIFT

(11) **EP 2 401 228 B1**
(45) Veröffentlichungstag und Bekanntmachung des Hinweises auf die Patenterteilung: **14.09.2016**
(21) Anmeldenummer: 10707487.4
(22) Anmeldetag: 19.02.2010
(51) Int. Cl.: C01B 25/37, H01M 4/58, B82Y 30/00

(54) **HERSTELLUNG VON EISENORTHOPHOSPHAT**
PRODUCTION OF IRON ORTHOPHOSPHATE
PROCÉDÉ DE PRODUCTION D'ORTHOPHOSPHATE DE FER

(30) Priorität: 26.02.2009 DE 102009001204
(43) Veröffentlichungstag der Anmeldung: 04.01.2012
(73) Patentinhaber: Chemische Fabrik Budenheim KG, 55257 Budenheim (DE)
(72) Erfinder: BÜHLER, Gunnar, 56645 Nickenich (DE); SCHWARZ, Kilian, 56129 Mainz (DE)
(74) Vertreter: WSL Patentanwälte Partnerschaft mbB
(86) Internationale Anmeldenummer: PCT/EP2010/052108
(87) Internationale Veröffentlichungsnummer: WO 2010/097341

(56) Entgegenhaltungen:
- EP-A1- 1 094 532
- WO-A2-2009/050055
- US-A- 2 414 974
- US-A- 5 437 870
- US-A1- 2003 064 287
- US-B2- 7 285 260
- REALE P ET AL: "Synthesis and Thermal Behavior of Hydrated Iron(III) Phosphates of Interest as Positive Electrodes in Li Battieries" CHEMISTRY OF MATERIALS, AMERICAN CHEMICAL SOCIETY, WASHINGTON, US LNKD- DOI:10.1021/CM031107Z, Bd. 15, Nr. 26, 4. Dezember 2003 (2003-12-04), Seiten 5051-5058, XP002523335 ISSN: 0897-4756

## Beschreibung

Die vorliegende Erfindung betrifft ein Verfahren zur Herstellung von Eisen(III)orthophosphat mit besonders hoher Reinheit.

Eisenphosphate kommen in vielen Bereichen zur Anwendung, z. B. als Nahrungsergänzungsmittel oder als Nahrungsmittelzusatz zur Mineralstoffanreicherung, als Werkstoff in Molluskiziden, in der Keramikindustrie oder als Rohstoff zur Herstellung von LiFePO₄-Kathodenmaterial für Li-Ionen-Akkumulatoren. Jedes Anwendungsgebiet stellt dabei individuelle Anforderungen an das Eisenphosphat, wobei in einigen Anwendungen insbesondere die chemische Reinheit von besonderer Bedeutung ist. Vielfach hat auch die Morphologie oder die Partikelfeinheit des Eisenphosphats eine kritische Bedeutung für den Anwendungserfolg, z. B. wenn man die Bioverfügbarkeit für Organismen betrachtet.

Wiederaufladbare Li-Ionen-Akkumulatoren sind weit verbreitete Energiespeicher, insbesondere im Bereich mobiler Elektronik, da sich der Li-Ionen-Akkumulatordurch eine hohe Energiedichte auszeichnet und eine hohe Nennspannung von 3,7 Volt liefern kann, so dass der Li-Ionen-Akkumulator bei vergleichbarer Leistung deutlich kleiner und leichter ist als herkömmliche Akkumulatoren. Als Kathodenmaterialien haben sich Spinelle wie LiCoO₂, LiNiO₂, LiNi₁₋ₓCoₓO₂ und LiMnₙO₄ etabliert. Um die Sicherheit der Li-Ionen-Akkumulatoren zu erhöhen, vor allem in Bezug auf eine thermische Überlastung im Betrieb, wurde LiFePO₄ als Kathodenmaterial entwickelt. Dieses Material zeichnet sich durch eine bessere Leistung, höhere spezifische Kapazität sowie hohe thermische Stabilität im Betrieb aus.

An das Kathodenmaterial eines Akkumulators werden hohe Reinheitsansprüche gestellt, da jede Kontamination, die während des Betriebes (Laden bzw. Entladen) unerwünschte Redox-Reaktionen eingehen kann, die Leistung des Akkumulators nachteilig beeinflußt. Die Art und Konzentration der möglichen Kontaminationen hängt im wesentlichen von der Qualität der zur Herstellung des Kathodenmaterials eingesetzten Rohstoffe ab. Im Herstellungsprozeß des Kathodenmaterials können Maßnahmen zur nachträglichen Reduzierung von Verunreinigungen getroffen werden, was jedoch im allgemeinen mit einer Erhöhung der Herstellungskosten verbunden ist. Es ist daher erstrebenswert, möglichst reine Ausgangsmaterialien bzw. Rohstoffe für die Herstellung des Kathodenmaterials zu verwenden.

Ein Ausgangsmaterial für die Herstellung von LiFePO₄ für Lithium-Ionen-Akkumulatoren ist Eisenorthophosphat, dessen Reinheit und Struktur bzw. Morphologie die Qualität des daraus hergestellten Kathodenmaterials wesentlich beeinflußt.

Bekannte Verfahren zur Herstellung von Eisen(III)orthophosphät verwenden FeSO₄ und FeCl₃ als Ausgangsmaterialien bzw. Rohstoffe, aber auch metallorganische Vorläuferverbindungen, wie FeC₂O₂ (Gmelins Handbuch der anorganischen Chemie, Eisen Teil B, Seiten 773 ff; US-A-3,407,034; C. Delacourt et al., Chem. Mater. 2003, 15, 5051-5058; Zhicong Shi et al., Electrochemical and Solid State Letters 2005, 8, A396-A399). Die Phosphor- bzw. Phösphatkomponente wird bei diesen Ausgangsmaterialien über ein Phosphatsalz bzw. Phosphorsäure eingebracht. In den beschriebenen Verfahren sind immer auch Zusätze von HCl, NaOH, NH₃, NaClO₃ oder Tenside notwendig, um die chemisch-physikalischen Eigenschaften der erhaltenen Produkte zu steuern. Dies hat zur Folge, dass die so hergestellten Materialien stets Verunreinigungen von Anionen, wie Chlorid oder Sulfat, Kationen, wie Natrium oder Ammonium, oder organische Komponenten enthalten. Großtechnisch lassen sich diese Verunreinigungen, wenn überhaupt, nur durch höchst aufwendige und kostenintensive Reinigungsverfahren entfernen.

Weitere kationische Kontaminationen, wie z. B. Übergangsmetalle, die ursprünglich in den eingesetzten Rohstoffen wie FeSO₄ oder FeCl₃ enthalten waren, können im allgemeinen nicht auf einfache Weise abgetrennt oder ausgewaschen werden, da auch sie in der Regel schwer lösliche Phosphatsalze bilden und gemeinsam mit dem gewünschten Eisenphosphat kristallisieren.

Die WO 02/30815 beschreibt ein Verfahren zur Herstellung von LiFePO₄ aus Eisenphosphat und Lithium, wobei zur Herstellung des Eisenphosphats ein Eisenoxid in 85%iger Phosphorsäure unter Erwärmen aufgelöst wird. Anschließend wird die Lösung solange verdünnt, bis die Löslichkeitsgrenze von FePO₄ erreicht ist und das Material kristallisiert. Durch fraktioniertes Verdünnen sollen hierbei unerwünschte Metallphosphate abgetrennt werden, die ein kleineres Löslichkeitsprodukt besitzen als FePO₄. Dieses Verfahren hat den Nachteil, dass es einen sehr hohen Energieeinsatz erfordert und viel Wasser benötigt wird, um das Produkt auszufällen. Bei diesem Verfahren bildet sich ein löslicher Komplex des Eisens, der über Wochen stabil ist und nur langsam kristallisiert. Dies reduziert die wirtschaftliche Ausbeute des Produkts erheblich. Durch Sieden der Lösung über mehrere Tage kann die Ausbeute gesteigert werden, was allerdings einen sehr hohen Energieaufwand erfordert. Zudem fällt bei dem Verfahren eine große Menge an verdünnter Phosphorsäure an, die nur nach Aufkonzentrierung wieder in den Prozeß eingesetzt werden kann. Das Verfahren ist daher sowohl aus ökonomischen als auch ökologischen Gesichtspunkten nicht interessant.

Die Verfahren nach dem Stand der Technik zur Herstellung von Eisenphosphaten haben weitere Nachteile, wenn das erhaltene Eisenphosphatprodukt zur Herstellung von LiFePO₄ für Li-Ionen-Akkumulatoren verwendet werden soll. Wichtige Gesichtspunkte für die Eignung des Materials sind die Morphologie und die Korngrößenverteilung der Eisenphosphate. Durch die Verfahren der Fällung von Eisenphosphat nach dem Stand der Technik werden in der Regel sphärische Kristalle unterschiedlicher Größe erhalten. Diese haben allerdings eine geringe Oberfläche im Vergleich zu anderen Kristallmorphologien. Für die Anwendung als Kathodenmaterial in Li-Ionen-Akkumulatoren ist ein Eisenphosphat mit einer großen Kristalloberfläche vorteilhaft, um eine Penetration der Lithiumionen in großer Anzahl und mit hoher Geschwindigkeit zu gewährleisten. Darüber hinaus ist es vorteilhaft, Kristalle von geringer Größe zu erhalten, um die Diffusionsstrecken und -zeiten der Lithiumionen zu verringern. Des weiteren ist eine hohe Schüttdichte und Verdichtbarkeit des Materials erwünscht, um in dem hergestellten Kathodenmaterial eine hohe Energiespeicherdichte zu realisieren.

Einige der vorgenannten Nachteile und Probleme des Standes der Technik werden durch ein Eisenorthophosphat und ein Verfahren zu dessen Herstellung nach der parallel anhängigen deutschen Patentanmeldung DE 102007049757, korrespondierend zu WO 2009/050055, überwunden. Bei dem Verfahren werden oxidische Eisen(II)-, Eisen(III)- oder gemischte Eisen(II,III)-Verbindungen mit Phosphorsäure mit einer Konzentration im Bereich von 5% bis 50% umsetzt und nach der Umsetzung gegebenenfalls vorhandenes Eisen(II) durch Zugabe eines Oxidationsmittels in Eisen (III) überführt und festes Eisen(III)orthophosphat aus dem Reaktionsgemisch abtrennt. In dem Ausgangsmaterial vorhandenes Eisen(III) wird durch die Zugabe der Phosphorsäure direkt als Eisen(III)orthophosphat ausgefällt. Das Verfahren hat jedoch den Nachteil, dass im Verlauf der Reaktion stets teilweise die Rohstoffe sowie das Produkt als Feststoffe nebeneinander vorliegen. Eine Abtrennung von Verunreinigungen, entweder als Lösung oder als Feststoffe, ist dadurch nicht möglich. Um eine hohe chemische Reinheit des Produktes zu erzielen, ist man daher auf die Qualität und Reinheit der Rohstoffe angewiesen und festgelegt.

Reale, P. et al., Synthesis and behaviour of hydrated iron (III) phosphates of interest as positive electrodes in Li batteries", Chem. Mater. 2003, 15, 5051-5058, beschreibt die Herstellung verschiedener Allotrope von Eisen(III)orthophosphat, nämlich Strengit, Metastrengit I und Metastrengit II. durch Ausfällung aus einer wässrigen Lösung von H₃PO₄ und FeCl₃ 6H₂O unter sorgfältiger Steuerung des pH-Wertes. Das Allotrop Strengit wird durch Anheben des pH-Wertes auf etwa 3 durch Zugabe von NaOH zu einer verdünnten Lösung erhalten. Metastrengit I erhält man unter stärker sauren Bedingungen, wobei je nach Anfangs-pH-Wert eine Umwandlung in Metastrengit II stattfinden kann. Metastrengit II erhält man, indem man der Ausgangslösung von Phosphorsäure und Eisen(III)chlorid einen Überschuss an HCl zusetzt. Die Kristallisation des Produkts erfordert dann eine sehr lange Zeitdauer von 12 Tagen, um Verunreinigungen mit den beiden anderen Allotropen zu verhindern.

Die US 7 285 260 offenbart ein Verfahren zur Herstellung von Eisen(III)orthophosphat aus Fe₂O₃ und Phosphorsäure unter Rückfluss bis zur Bildung eines rosa Pulvers.

Die Aufgabe der vorliegenden Erfindung bestand daher darin, ein Verfahren zur Herstellung von Eisen(III)orthophosphat bereitzustellen, bei dem die bekannten Nachteile aus dem Stand der Technik überwunden werden und mit dem gegenüber bekannten Herstellungsverfahren Eisen(III)orthophosphat auf einfachere Weise in hoher Reinheit erhältlich ist.

Die Aufgabe der vorliegenden Erfindung wird gelöst durch ein Verfahren zur Herstellung von Eisen(III)orthophosphat der allgemeinen Formel FePO₄ x nH₂O (n ≤ 2,5), bei dem man
a) eine Fe²⁺-Ionen enthaltende wässrige Lösung herstellt, indem man Eisen(II)-, Eisen(III)- oder gemischte Eisen(II,III)-Verbindungen, ausgewählt unter Hydroxiden, Oxiden, Oxidhydroxiden, Oxidhydraten, Carbonaten und Hydroxidcarbonaten, zusammen mit elementarem Eisen in ein Phosphorsäure enthaltendes wässriges Medium einbringt und Fe²⁺-Ionen in Lösung bringt und Fe³⁺ mit elementarem Fe (in einer Komproportionierungsreaktion) zu Fe²⁺ umsetzt,
b) Feststoffe von der phosphorsauren wässrigen Fe²⁺-Lösung abtrennt,
c) zu der phosphorsauren wässrigen Fe²⁺-Lösung ein Oxidationsmittel zugibt, um Eisen(II) in der Lösung zu oxidieren, und Eisen(III)orthophosphat der allgemeinen Formel FePO₄ x nH₂O ausfällt.

In dem erfindungsgemäßen Verfahren können die Ausgangsstoffe (Eisen(II)-, Eisen(III)- oder gemischte Eisen(II,III)-Verbindungen, elementares Eisen) in Pulverform, vorzugsweise in mit Korngrößen D50 im Bereich von 0,01 µm bis 300 µm, eingesetzt und direkt mit dem Phosphorsäure enthaltenden wässrigen Medium, vorzugsweise mit verdünnter Phosphorsäure, gemischt und umgesetzt werden. Alternativ können die Ausgangsstoffe oder kann ein Teil der Ausgangsstoffe zunächst über eine Fällung und eventuell anschließendes Glühen frisch erzeugt und im danach als Filterkuchen weiter verarbeitet werden. Es entsteht eine durch den Feststoffanteil des Rohstoffs gefärbte bzw. getrübte Aufschlämmung (schwarz bis braun bis rot).

Wenn hierin von wässrigem Lösungsmittel die Rede ist, so umfasst dies Ausführungsformen, die ausschließlich Wasser als flüssiges Medium beinhalten, aber auch solche Ausführungsformen, bei denen das flüssige Medium zu einem vorzugsweise überwiegenden Teil aus Wasser besteht, es aber auch Anteile von mit Wasser mischbaren organischen und/oder ionischen Lösungsmitteln bzw. Flüssigkeiten enthalten kann. Es ist bekannt, dass solche Lösungsmittelzusätze einen Einfluss auf das Kristallwachstum und damit auf die resultierende Morphologie des Produkts haben können.

In dem Phosphorsäure enthaltenden wässrigen Medium kommt es zwischen Fe³⁺ aus den Eisenverbindungen und dem elementaren Eisen zu einer Redoxreaktion, wobei in einer Komproportionierung nach der folgenden Reaktionsgleichung (I) lösliches Fe²⁺ gebildet wird.

(I) 2 Fe³⁺ + Fe → 3 Fe²⁺

Der Reaktionsansatz erwärmt sich um etwa 2 bis 25°C je nach Rohstoff, wenn die entstehende Reaktionswärme nicht abgeführt wird, was prinzipiell nicht notwendig ist. Nach dem Abklingen der Reaktion wird der Ansatz unter Rühren auf höhere Temperaturen, vorzugsweise unterhalb von 65°C, erwärmt, wobei die eingebrachten Feststoffe je nach Zusammensetzung und Reinheit mehr oder weniger vollständig unter Bildung einer typisch grün gefärbten Fe²⁺-Lösung abreagieren.[ Nach etwa 50 bis 120 min ist dieser Prozessschritt abgeschlossen. Die Dauer hängt unter anderem von den eingesetzten Rohstoffen und Konzentrationen ab.

Je nach Reinheit der eingesetzten Feststoffe verbleibt eine mehr oder weniger ausgeprägte Trübung in der Lösung, die durch Verbindungen hervorgerufen wird, die unter den Reaktionsbedingungen unlöslich sind. Dieser verbleibende Feststoffanteil kann durch einfache Filtration, Sedimentation, Zentrifugation oder andere geeignete Mittel entfernt werden. Die Auswagen dieser Feststoffe variieren je nach Wahl der in das Verfahren eingesetzten Ausgangsstoffe, Säurekonzentration und Reaktionstemperatur.

Um weitere Verunreinigungen bzw. unerwünschte Stoffe und Verbindungen aus der Lösung zu entfernen, können der Lösung mit Vorteil definierte Fällungsreagenzien zugesetzt werden. So kann z. B. der Kalziumgehalt in der Lösung durch Zusatz von geringen Mengen Schwefelsäure unter Fällung von Kalziumsulfat reduziert werden. Des Weiteren kann mit Vorteil auch eine zusätzliche elektrolytische Fällung oder Abscheidung von unerwünschten Metallionen aus der Lösung durchgeführt werden, bevor in der Eisen(II)-Lösung durch Oxidation Eisen(III) hergestellt und das Eisen(III)orthophosphat ausgefällt wird.

Ein Vorteil des erfindungsgemäßen Verfahrens besteht darin, dass man als Zwischenprodukt eine homogene phosphorsaure wässrige Eisen(II)-Lösung herstellt, von der man sämtliche als Feststoffe vorliegende oder durch Fällungszusätze in Feststoffe überführbare oder elektrolytisch abscheidbare Verunreinigungen mit einfachen Mitteln abtrennen kann, bevor man in der als Zwischenprodukt hergestellten gereinigten Eisen(II)-Lösung das Eisen(III)orthophosphat durch Oxidation herstellt und wiederum als Feststoff ausfällt. Der Feststoff Eisen(III)orthophosphat liegt somit nicht gleichzeitig neben anderen ursprünglich eingesetzten unlöslichen Ausgangsverbindungen in der wässrigen Lösung vor, wie dies beispielsweise bei dem Verfahren nach der parallel anhängigen deutschen Patentanmeldung DE 102007049757 der Fall ist. Das erfindungsgemäße Verfahren erlaubt dadurch gegenüber anderen Verfahren die Herstellung von Eisen(III)orthophosphat mit hoher Reinheit, ohne dass nachträglich besonders aufwendige Reinigungsverfahren durchgeführt werden müssen.

In einer Ausführungsform des erfindungsgemäßen Verfahrens führt man die Umsetzung der Eisenverbindungen zusammen mit elementarem Eisen in Phosphorsäure enthaltendem wässrigem Medium bei einer Temperatur im Bereich von 15°C bis 90°C, vorzugsweise im Bereich von 20°C bis 75°C, besonders bevorzugt im Bereich von 25 °C bis 65 °C durch. Bei einer zu niedrigen Temperatur ist die Reaktionsgeschwindigkeit langsam und eventuell unwirtschaftlich. Bei einer zu hohen Temperatur kann es teilweise zu einer vorzeitigen Ausfällung von Eisen(III)orthophosphat unter anderem aufgrund möglicher Festkörperreaktion an den in der Suspension enthaltenen festen Ausgangsstoffen kommen. Des Weiteren wird durch zu hohe Temperatur der Ablauf von Nebenreaktionen, wie sie unten beschrieben werden, gefördert.

Zweckmäßigerweise führt man die Umsetzung der Eisenverbindungen zusammen mit elementarem Eisen in Phosphorsäure enthaltendem wässrigem Medium unter intensivem Durchmischen durch, vorzugsweise unter Rühren. Hierfür können alle auf dem Gebiet bekannten Mischer und Rührer, die für einen solchen Verwendungszweck geeignet sind, eingesetzt werden. Es können auch mit Vorteil Leitstrahlmischer, Homogenisatoren, Flußreaktionszellen etc. zur Durchmischung und/oder Bewegung des Reaktionsansatzes verwendet werden.

In einer weiteren Ausführungsform des erfindungsgemäßen Verfahrens führt man die Umsetzung der Eisenverbindungen zusammen mit elementarem Eisen in Phosphorsäure enthaltendem wässrigem Medium für einen Zeitraum von 1 min bis 120 min, vorzugsweise von 5 min bis 60 min, besonders bevorzugt von 20 min bis 40 min durch. Die Umsetzung der Eisenverbindungen zusammen mit elementarem Eisen in Phosphorsäure enthaltendem wässrigem Medium kann selbstverständlich zu jedem Zeitpunkt durch Abtrennen der Feststoffe von der wässrigen Lösung abgebrochen werden, wobei man bei unvollständiger Umsetzung unter Umständen einen Ausbeuteverlust hat.

In dem erfindungsgemäßen Verfahren beträgt die Konzentration der Phosphorsäure in dem wässrigen Medium geeigneterweise 5% bis 85%, vorzugsweise 10% bis 40%, besonders bevorzugt 15% bis 30%, bezogen auf das Gewicht der wässrigen Lösung. Niedrige Phosphorsäurekonzentrationen sind wirtschaftlich von Vorteil, wobei die Reaktion bei zu geringen Konzentrationen sehr langsam ablaufen kann, was unter wirtschaftlichen Gesichtspunkten auch unerwünscht sein kann. Bei hohen Phosphorsäurekonzentrationen, wie beispielsweise über 35%, kann es je nach Feinheit der eingesetzten Eisenverbindungen zu deren Verklumpung kommen, was die Dauer der oben beschriebenen Komproportionierungsreaktion zwischen Fe³⁺ und elementarem Eisen beträchtlich erhöht. Es wurde auch ein Einfluss der Phosphorsäurekonzentration auf die Feinheit des Endprodukts beobachtet. So führt eine niedrigere Phosphorsäurekonzentration eher zu einem feineren Endprodukt mit einer mittleren Teilchengröße D50 < 35 µm, wogegen eine höhere Phosphorsäurekonzentration eher die Herstellung eines groberen Endprodukts mit einer mittleren Teilchengröße D50 > 35 µm fördert. Die Phosphorsäurekonzentration kann für den Fällungschritt nach der Komproportionierungsreaktion zwischen Fe³⁺ und elementarem Eisen eingestellt werden, indem konzentrierte Phosphorsäure oder Wasser zugesetzt oder enthaltenes Wasser durch Verdampfen entfernt wird. Dadurch besteht die Möglichkeit, die Feinheit des Endprodukts Eisen(III)orthophosphat unabhängig von den zur Herstellung der Fe²⁺-Lösung eingesetzten Rohstoffmengen zu steuern.

In einer Nebenreaktion zwischen dem elementaren Eisen und der Phosphorsäure entsteht nach der folgenden Reaktionsgleichung (II) Wasserstoffgas, das aus Sicherheitsgründen gezielt abgeführt werden muss.

(II) Fe + H₃PO₄ → Fe²⁺ + HPO₄²⁻ + H₂

Diese Nebenreaktion lässt sich nicht unterdrücken, so dass stets ein stöchiometrischer Überschuss an elementarem Eisen gegenüber der Menge eingesetzt werden muss, die gemäß der oben angegebenen Reaktionsgleichung (I) zur Umsetzung von Fe³⁺ im Eisenrohstoff benötigt wird. Die exakte Menge dieses Überschusses hängt weitgehend von den Reaktionsbedingungen ab, wie der Feinheit bzw. Oberflächenaktivität der eingesetzten Feststoffe, der Temperatur und der Säurekonzentration. Ein Überschuss von wenigen Prozent der stöchiometrischen Menge hat sich in vielen Fällen als ausreichend erwiesen. Bei Temperaturen oberhalb von 40°C wurde ein Anstieg der Geschwindigkeit der Nebenreaktion beobachtet. Oberhalb von 70° C kann eine gleichzeitige Fällung von Eisenorthophosphat einsetzen, so dass man keine homogene Fe²⁺-Lösung erhält. Kommt es zu der bereits oben genannten Verklumpung der oxidischen Eisenkomponente, reagiert das elementare Eisen weitgehend über die Nebenreaktion ab. Die entsprechenden Stöchiometrien sind daher an die jeweils gewählten Reaktionsbedingungen sowie an die Reaktivität der eingesetzten Rohstoffe anzupassen.

Nach dem Lösen des Eisen(II) aus dem Ausgangsmaterial und dem Umsetzen des Eisen(III) und des elementaren Eisens durch Komproportionierung zu Eisen(II) wird nach der oben beschriebenen Entfernung gegebenenfalls vorhandener Verunreinigungen die Beheizung der Reaktion abgebrochen bzw. die Temperatur auf zweckmäßigerweise etwa 85 bis 100°C begrenzt und Oxidationsmittel zugesetzt, bis im Wesentlichen der gesamte Anteil an Eisen(II) zu Eisen(III) oxidiert wurde und sich kein Eisen(II) mehr nachweisen lässt bzw. eine vorgegebene Eisen(II)-Konzentration unterschritten ist. Unter diesen Bedingungen fällt Eisen(III)orthophosphat als beigeweißer bis leicht rosa gefärbter Feststoff aus. Der vorgenannte Temperaturbereich von etwa 85 bis 100°C ist für die Oxidations- und Fällungsstufe erfindungsgemäß bevorzugt, jedoch sind andere Temperaturbereich nicht ausgeschlossen. Das Produkt kann durch Filtration oder andere gängige Verfahren als Feststoff abgetrennt werden. Durch Trocknung bei verschiedenen Trocknungsintensitäten lassen sich verschiedene Produkte der allgemeinen Formel FePO₄ x nH₂O erhalten (n ≤ 2,5) erhalten.

Durch Einstellen der Säurekonzentration bereits zu Beginn während des Lösungsprozesses oder aber auch erst später kurz vor oder während des Oxidationsprozesses kann die Morphologie des Produktes gesteuert werden. Ein Produkt mit hoher Schüttdichte wird erhalten, wenn man die Fällung bei einer Säurekonzentration von 23-25% durchführt. Bei höheren und geringeren Konzentrationen werden Produkte mit geringen Schüttdichten erhalten.

In einer bevorzugten Ausführungsform des erfindungsgemäßen Verfahrens ist das Oxidationsmittel, welches zugegeben wird, um Eisen(II) in der Lösung zu oxidieren, eine wässrige Lösung von Wasserstoffperoxid (H₂O₂). Die Wasserstoffperoxidlösung hat bevorzugt eine Konzentration von 15 bis 50 Gew.-%, besonders bevorzugt 30 bis 40 Gew.-%.

In alternativen Ausführungsformen des erfindungsgemäßen Verfahrens ist das Oxidationsmittel, welches zugegeben wird, um Eisen(II) in der Lösung zu oxidieren, ein unter Luft, reinem Sauerstoff oder Ozon ausgewähltes gasförmiges Medium, welches in die wässrige Lösung eingeblasen wird.

Die Oxidation durch Zugabe eines geeigneten Oxidationsmittels wird vorzugsweise unmittelbar nach dem Abtrennen der Feststoffe von der phosphorsauren wässrigen Fe²⁺-Lösung durchgeführt, Bei der Oxidationsreaktion kann die Temperatur des Reaktionsgemisches bei der zuvor für die Umsetzung der Eisenverbindungen eingestellten Temperatur oder in deren Nähe gehalten werden. Bevorzugt ist ein Temperaturbereich von etwa 85 bis 100°C. Alternativ kann. die Oxidationsreaktion nach dem Abkühlen der Lösung auf Raumtemperatur oder darunter durchgeführt werden, wodurch die Ausfällung des gebildeten Eisen(III)orthophosphats aber nicht begünstigt wird. Sowohl die Oxidationsreaktion als auch die Ausfällung des gebildeten Eisen(III)orthophosphats laufen bei erhöhter Temperatur in der Regel leichter und schneller ab, weshalb die Durchführung dieser Stufe bei moderat erhöhter Temperatur bevorzugt ist.

Die Oxidationsreaktion wird durchgeführt, bis in dem Reaktionsgemisch kein bzw. im wesentlichen kein Eisen(II) mehr nachweisbar ist. Für den Nachweis von Eisen(II) in der wässrigen Lösung stehen dem Fachmann bekannte Schnelltests (z. B. Teststäbchen oder Teststreifen) zur Verfügung, deren Genauigkeit für die Zwecke der vorliegenden Erfindung ausreichend ist. Das Abtrennen des Eisen(III)orthophosphats von der wässrigen Lösung erfolgt vorzugsweise durch Filtration, Sedimentation, Zentrifugieren oder Kombinationen der vorgenannten Trennverfahren. Zweckmäßigerweise wird das aus dem Reaktionsgemisch abgetrennte Eisen(III)orthophosphat anschließend bei erhöhter Temperatur und/oder unter vermindertem Druck getrocknet. Alternativ kann das Eisen(III)orthophosphat nach der Abtrennung auch vorteilhaft in feuchter Form als Filterkuchen oder Dispersion mit Feststoffgehalten von 1 bis 90 Gew.-%, je nach möglicher oder gewünschter Effizienz des Entwässerungsschrittes, weiterverarbeitet werden.

Das erfindungsgemäße Verfahren zur Herstellung von Eisen(III)orthophosphat hat gegenüber anderen bekannten Verfahren neben der erzielbaren hohen Reinheit des Endproduktes auch einige ökologische und ökonomische Vorteile. Die nach der Abtrennung von Eisen(III)orthophosphat zurückbleibende Mutterlauge enthält im wesentlichen keine verunreinigenden Umsetzungsprodukte, wie beispielsweise Sulfate oder Chloride, die bei den bekannten Verfahren nach dem Stand der Technik zurückbleiben, bei denen Eisensulfat oder Eisenchlorid als Ausgangsmaterial eingesetzt werden. Mutterlauge aus dem Verfahren gemäß der vorliegenden Erfindung kann daher durch Zugabe konzentrierter Phosphorsäure wieder auf die gewünschte Konzentration eingestellt werden und ist somit vollständig in den Prozeß rückführbar. Dies spart Kosten und vermeidet unerwünschte Abfälle.

Das erfindungsgemäß hergestellte Eisen(III)orthophosphat ist gegenüber dem Stand der Technik nicht nur einfacher und mit weniger Aufwand mit besonders hoher Reinheit herstellbar, es unterscheidet sich auch strukturell und hinsichtlich seiner Zusammensetzung bzw. Verunreinigungen von Eisen(III)orthophosphat, das nach bekannten Verfahren aus dem Stand der Technik hergestellt wurde. Dazu tragen unter anderem auch die als Ausgangsmaterialien eingesetzten Eisen(II)-, Eisen(III)- und gemischten Eisen(II,III)-Verbindungen bei, die unter Hydroxiden, Oxiden, Oxidhydroxiden, Oxidhydraten, Carbonaten und Hydroxidcarbonaten ausgewählt sind. Im Gegensatz zur vorliegenden Erfindung setzen bekannte Verfahren zur Herstellung von Eisen(III)orthophosphat nach dem Stand der Technik unter anderem Eisensulfat oder sulfathaltige Rohstoffe und/oder nitrathaltige Rohstoffe ein und steuern den Verlauf des pH-Wertes der Reaktion mit Natronlauge. Die erhaltenen Eisenphosphate enthalten daher hohe Rückstände an Schwefel, überwiegend in der Form von Sulfat, Nitrat und Natrium.

Ein zu hoher Gehalt an Schwefel, meist als Sulfat vorliegend, und ein zu hoher Gehalt an Nitrat beeinträchtigen die Qualität eines aus dem Eisen(III)orthophosphat hergestellten LiFePO₄-Kathodenmaterials für Li-Ionen-Akkumulatoren, da diese Anionen unerwünschte Redox-Reaktionen eingehen. In einer Ausführungsform der vorliegenden Erfindung weist das Eisen(III)orthophosphat daher einen Schwefelgehalt von < 300 ppm, vorzugsweise <200 ppm, besonders bevorzugt < 100 ppm auf. In einer weiteren Ausführungsform der vorliegenden Erfindung weist das Eisen(III)orthophosphat oder einen Nitratgehalt von < 300 ppm, vorzugsweise < 200 ppm, besonders bevorzugt < 100 ppm auf.

Natrium- und Kaliumkationen beeinträchtigen ebenfalls die Qualität eines aus dem Eisen(III)orthophosphat hergestellten LiFePO₄-Kathodenmaterials, da sie Lithiumplätze besetzen können. In einer weiteren Ausführungsform der Erfindung weist das Eisen(III)orthophosphat daher einen Gehalt an Natrium und Kalium von jeweils < 300 ppm, vorzugsweise < 200 ppm, besonders bevorzugt < 100 ppm auf.

Auch zu hohe Verunreinigungen an Metallen und Übergangsmetallen beeinträchtigen die Qualität eines aus dem Eisen(III)orthophosphat hergestellten LiFePO₄-Kathodenmaterials In einer weiteren Ausführungsform der Erfindung weist das Eisen(III)orthophosphat daher einen Gehalt an Metallen und Übergangsmetallen, ausgenommen Eisen, von jeweils < 300 ppm, vorzugsweise < 200 ppm, besonders bevorzugt < 100 ppm auf.

Die Eigenschaften des erfindungsgemäß hergestellten Produkts, nämlich des erfindungsgemäß hergestellten Eisen(III)orthophosphats, werden durch sein Herstellungsverfahren und die zu seiner Herstellung verwendeten Ausgangsmaterialien wesentlich beeinflußt und unterscheiden sich von Eisen(III)orthophosphat nach dem Stand der Technik.

Eisen(III)orthophosphate, die nach allgemein bekannten Verfahren aus Eisensulfat oder Eisenchlorid hergestellt werden, weisen auch Unterschiede in der Kristallstruktur auf. Röntgenstrukturuntersuchungen haben gezeigt, dass nach dem Stand der Technik aus Eisensulfat oder Eisenchlorid hergestellte Eisen(III)orthophosphate überwiegend in der Metastrengit I-Struktur mit geringen Anteilen an Strengit und Metastrengit II (Phosphosiderit) vorliegen. Demgegenüber wurde bei Röntgenstrukturuntersuchungen an erfindungsgemäß hergestellten Eisen(III)orthophosphaten festgestellt, dass diese überwiegend in der Metastrengit II-Struktur (Phosphosiderit) mit sehr geringen oder nicht nachweisbaren Anteilen an Strengit und Metastrengit I vorliegen.

In einer Ausführungsform des erfindungsgemäß hergestellten Eisen(III)orthophosphats liegen daher > 80 Gew.-%, vorzugsweise > 90 Gew.-%, besonders bevorzugt > 95 Gew.-% des Eisen(III)orthophosphats in der Metastrengit II-(Phosphosiderit), Kristallstruktur vor.

Das Vorkommen der drei zuvor beschriebenen allotropen Formen von Eisen(III)orthophosphat (Metastrengit I, Metastrengit II und Strengit) ist in der Literatur ebenso beschrieben, wie die Schwierigkeit, ein phasenreines System herzustellen (C. Delacourt et al., Chem. Mater. 2003, 15, 5051-5058). Entgegen den in der Literatur geäußerten Vorbehalten haben die Erfinder nun herausgefunden, dass sich mit dem hierein beschriebenen Verfahren das Eisen(III)phosphat in der Metastrengit II-Struktur auch in einem allein durch die Phosphorsäure bestimmten pH-Wert-Bereich in bemerkenswert reiner Form darstellen läßt.

Das erfindungsgemäß hergestellte Eisen(III)orthophosphat weist vorzugsweise eine plättchenförmige Morphologie mit Metastrengit II-Struktur auf. Diese Struktur erlaubt eine gegenüber sphärischen Partikeln erheblich dichtere Packung der Kristallite und Teilchen bei geringerem Ausschlußvolumen. Mit dem erfindungsgemäß hergestellten Eisen(III)orthophosphat sind daher hohe Schüttdichten und Stampfdichten realisierbar, was für den Einsatz in LiFePO₄-Kathodenmateriälien besonders vorteilhaft ist. Eine geringe Dicke der Kristallplättchen gewährleistet beispielsweise eine hohe Reaktionsgeschwindigkeit bei der Herstellung von LiFePO₄ sowie eine höhere Leistung des fertigen Kathodenmaterials, da die Diffusionsstrecken und Diffusionszeiten der Li-Ionen gegenüber herkömmlichem Material deutlich reduziert werden können. Zudem lassen sich schichtartig aufgebaute Aggregate/Agglomerate dieses Materials durch gängige Methoden unter Einwirkung von Scherkräften (Turrax, Rührwerkskugelmühle, Ultraschall etc.) leicht in Dispersionen der Primärpartikel überführen.

Bevorzugt liegt das erfindungsgemäß hergestellte Eisen(III)orthophosphat in der Form plättchenförmiger Kristalle vor. Vorzugsweise haben diese Kristalle eine geringe Dicke im Bereich von weniger als 1000 nm, bevorzugt < 500 nm, besonders bevorzugt < 300 nm, ganz besonders bevorzugt < 100 nm. Die Abmessungen der plättchenförmigen Kristalle in den zwei zur Dicke senkrechten Dimensionen liegen bevorzugt im Bereich von 200 bis 2000 nm, besonders bevorzugt 300 bis 900 nm, ganz besonders bevorzugt 400 bis 800 nm.

Des weiteren weist das erfindungsgemäß hergestellte Eisen(III)orthophosphat bevorzugt eine Schüttdichte > 400 g/l, vorzugsweise > 700 g/l, besonders bevorzugt > 1000 g/l auf. Weiterhin bevorzugt weist das erfindungsgemäß hergestellte Eisen(III)orthophosphat eine Stampfdichte > 600 g/l, vorzugsweise > 750 g/l, besonders bevorzugt > 1100 g/l auf.

Das erfindungsgemäß hergestellte Eisen(III)orthophosphat zeigt somit eine sehr feine Primärpartikelgröße und dennoch gleichzeitig eine sehr hohe erreichbare Schüttdichte bzw. eine hohe Stampfdichte. Im Vergleich zum Stand der Technik war dies überraschend. Eisen(III)orthophosphate, die nach allgemein bekannten Verfahren aus Eisensulfat oder Eisenchlorid hergestellt werden, weisen üblicherweise eine Primärpartikelgröße von > 1 µm auf, wodurch sich auch hohe Schüttdichten von > 1000 g/l realisieren lassen. Stellt man nach diesen bekannten Verfahren aus Eisensulfat oder Eisenchlorid entsprechende Eisen(III)orthophosphate mit geringeren Primärteilchengrößen im Sub-Mikrometerbereich her, so lassen sich nur geringe Schüttdichten bis 400 g/l erreichen. Die Gründe hierfür liegen vermutlich in der durch die Kristallstruktur beeinflußten Partikelmorphologie und der Teilchengrößenverteilung. Die Morphologie von Eisen(III)phosphaten, die nach allgemein bekannten Verfahren aus Eisensulfat oder Eisenchlorid hergestellt werden, besteht überwiegend aus sphärischen Partikeln, wohingegen das erfindungsgemäß hergestellte Eisen(III)orthophosphat die zuvor bereits beschriebene Morphologie mit einem hohen Anteil an eckigen, plättchenförmigen Kristallen besitzt.

Das erfindungsgemäß hergestellte Eisen(III)orthophosphat eignet sich zur Herstellung von LiFe-PO₄-Kathodenmaterial für Li-Ionen-Akkumulatoren. Die Herstellung eines solchen Kathodenmaterials unter Verwendung von Eisen(III)orthophosphat ist dem Fachmann an sich bekannt, jedoch bietet hier das erfindungsgemäß hergestellte Eisen(III)orthophosphat die oben beschriebenen besonderen Vorteile.

In einem weiteren Aspekt eignet sich das erfindungsgemäß hergestellte Eisen(III)orthophosphats als Nahrungsergänzungsmittel und zur Mineralstoffanreicherung von Lebensmitteln, da es lebensmitteltauglich ist und eine sehr hohe Bioverfügbarkeit für den Organismus besitzt. Mit besonderem Vorteil kommt hier das erfindungsgemäß hergestellte Eisen(III)orthophosphat in der Form von wässrigen Dispersionen zur Anwendung.

In einem weiteren Aspekt eignet sich das erfindungsgemäß hergestellte Eisen(III)orthophosphats als Molluskizid, z.B. bei der Bekämpfung von Schnecken. Eisen(III)orthophosphat ist an sich für seine molluskizide Wirkung bekannt. Es führt zu einem Ausschleimen der Tiere. Das erfindungsgemäße Eisen(III)orthophosphat ist aufgrund seiner strukturbedingt hohen Bioverfügbarkeit gegenüber herkömmlich hergestelltem Eisen(III)phosphat besonders wirksam, so dass zum Erzielen gleicher Wirkung weniger Substanz benötigt wird. Mit besonderem Vorteil kommt hier das erfindungsgemäße Eisen(III)orthophosphat in der Form von wässrigen Dispersionen zur Anwendung.

Weitere Vorteile, Merkmale und Ausführungsformen der vorliegenden Erfindung ergeben sich aus den nachfolgenden Beispielen, welche die vorliegende Erfindung erläutern, diese jedoch nicht beschränken sollen.

### Beispiele

### Beispiel 1

Eine verdünnte Phosphorsäure (18Gew.-%; Dichte = 1,146 g/ml bei 20°C) wird bei Raumtemperatur (RT; 20°C) vorgelegt und mit 20g Eisenoxid (Magnetit; Fe₃O₄) versetzt. Der Ansatz wird bei 10.000 UpM für 10 min mit einem Dispergierstab homogenisiert. Anschließend wird die erhaltene Suspension unter Rühren mit 7g Eisenpulver versetzt.

Es setzt eine exotherme Reaktion ein. Die Temperatur steigt von ca. 20°C auf ca. 40°C innerhalb von 20 min an. Die Suspension ändert in diesem Zeitraum ihre Farbe von schwarz nach grünbraun, und der Ausgangsstoff geht in Lösung. Anhand kleiner Bläschen in der Suspension ist zu erkennen, dass es zu Gasentwicklung (H₂) kommt. Mit einem Blasenzähler wurde die entstandene Gasmenge quantifiziert. Nachdem der Lösevorgang abgeschlossen ist, wird die Lösung filtriert, um Feststoffe von der Lösung abzutrennen. Anschließend wird die Lösung auf 80°C erhitzt und mit ca. 55 ml H₂O₂ (35 Gew.-%) versetzt, um die in der Lösung befindlichen Fe²⁺-Ionen zu Fe³⁺-Ionen zu oxidieren. Als Zersetzungsprodukt von H₂O₂. entsteht Sauerstoff. Mit Hilfe eines Schnelltests auf Fe²⁺-Ionen (Teststäbchen der Fa. Merck) wird überprüft, ob die Oxidationsreaktion vollständig ist. Gegebenenfalls wird H₂O₂ nachdosiert. Anschließend wird die nun rosa gefärbte Lösung bei ca. 85°C gehalten und Eisen(III)orthophosphat ausgefällt. Das Ausfällen dauert etwa 30 min. Das Endprodukt ist hellrosa und wird nach dem Ausfällen über eine Fritte abgesaugt und mit 400 ml Wasser gewaschen. Je feiner das Material ist, desto länger kann der Absaugvorgang dauern. Das Produkt wird anschließend in einem Trockenschrank für 3h bei 80°C getrocknet. Die Ausbeute beträgt mindestens 90%. Das Endprodukt ist ein feines Eisen(III)orthophosphat.

### Beispiel 2

Wie Beispiel 1, jedoch wird eine etwas höher konzentrierte Phosphorsäure vorgelegt (25Gew.-%; Dichte = 1,208 g/ml bei 20°C), und nach der Oxidationsreaktion wird das Eisen(III)orthophosphat bei 100°C ausgefällt. Die Ausbeute beträgt über 90%. Das Endprodukt ist ein im Vergleich zu Beispiel 1 grobes Eisen(III)orthophosphat.

### Beispiel 3

20 g Fe₃O₄ werden in 125 g H₂O vorgelegt und mit einem Ultraturrax bei 10000 Upm für 30 min vorbehandelt. Anschließend werden 125g 75%ige Phosphorsäure, weitere 125g H₂O und 7g Fe bei RT hinzugegeben. Die Dichte der verdünnten Phosphorsäure in dem Ansatz beträgt 1,146 g/ml bei 20°C. Es tritt eine leichte Gasentwicklung auf, die über den gesamten Reaktionszeitraum anhält. Innerhalb von 7 min steigt die Temperatur auf 42° C und die Farbe der Suspension ändert sich nach braun. Nach 9 min wird kein weiterer Temperaturanstieg mehr festgestellt und daher das Reaktionsgemisch in einem Ölbad (T=120° C) erwärmt. Nach 70 min liegt eine grüne Lösung vor, die eine sehr geringe Trübung aufweist. Eine weitere Gasentwicklung wird nicht mehr beobachtet. Die Trübung wird durch Filtration entfernt und das Filtrat mit 40 ml H₂O₂-Lsg (35 Gew.-%) bei 80°C versetzt. Es stellt sich eine Farbveränderung über intensiv rot zu hell rosa ein, wobei das Produkt als feiner Feststoff mit hellrosa Farbe ausfällt. Die Ausbeute beträgt 99,8% (71,7g).

### Beispiel 4

20 g Fe₃O₄, 7g Fe, 250g H₂O und 125g 75%ige Phosphorsäure werden bei RT zusammengegeben. Die Dichte der verdünnten Phosphorsäure in dem Ansatz beträgt 1,146 g/ml bei 20°C. Es tritt eine leichte Gasentwicklung auf, die über den gesamten Reaktionszeitraum anhält. Innerhalb von 20 min steigt die Temperatur auf 38° C und die Farbe der Suspension ändert sich nach braun. Nach 30 min wird kein weiterer Temperaturanstieg mehr festgestellt und daher das Reaktionsgemisch in einem Ölbad (T=120°C) erwärmt. Nach 90 min liegt eine grüne Lösung vor, die eine sehr geringe Trübung aufweist. Eine weitere Gasentwicklung wird nicht mehr beobachtet. Die Trübung wird durch Filtration entfernt und das Filtrat mit 40 ml H₂O₂-Lsg (35 Gew.-%) bei 85°C versetzt. Es stellt sich eine Farbveränderung über intensiv rot zu hell rosa ein, wobei das Produkt als feiner Feststoff mit hellrosa Farbe ausfällt. Die Ausbeute beträgt 83,5% (60,0g).

### Beispiel 5

20 g Fe₃O₄, 7g Fe, 250g H₂O und 204g 75%ige Phosphorsäure werden bei RT zusammengegeben. Die Dichte der verdünnten Phosphorsäure in dem Ansatz beträgt 1,232 g/ml bei 20°C. Es tritt eine leichte Gasentwicklung auf, die über den gesamten Reaktionszeitraum anhält. Innerhalb von 10 min steigt die Temperatur auf 53°C, und die Farbe der Suspension ändert sich nach braun. Es wird sofort mit Hilfe eines Eisbades auf 50°C gekühlt. Nach weiteren 40 min bei 50°C liegt eine grüne Lösung vor, die eine sehr geringe Trübung aufweist. Eine weitere Gasentwicklung wird nicht mehr beobachtet. Die Trübung wird durch Filtration entfernt und das Filtrat mit 40 ml H₂O₂-Lsg. (35 Gew.-%) bei 85°C versetzt. Es stellt sich eine Farbveränderung über intensiv rot zu hell rosa ein, wobei das Produkt als grober Feststoff mit hellrosa Farbe ausfällt. Die Ausbeute beträgt 85,8% (61,6g).

### Beispiel 6

10 g Fe₂O₃, 3,2g Fe, 211g H₂O und 93g 75%ige Phosphorsäure werden bei 50°C zusammengegeben. Die Dichte der verdünnten Phosphorsäure in dem Ansatz beträgt 1,134 g/ml bei 20°C. Es tritt eine leichte Gasentwicklung auf, die über den gesamten Reaktionszeitraum anhält. Nach 157 min bei 50°C liegt eine grüne Lösung vor, die eine sehr geringe Trübung aufweist. Eine weitere Gasentwicklung wird nicht mehr beobachtet. Die Trübung wird durch Filtration entfernt und das Filtrat mit 20 ml H₂O₂-Lsg. (35 Gew.-%) bei 85°C versetzt. Es stellt sich eine Farbveränderung über intensiv rot zu hell rosa ein, wobei das Produkt als feiner Feststoff mit hellrosa Farbe ausfällt. Die Ausbeute beträgt 30,2g.

### Beispiel 7

10 g Fe₂O₃, 11g Fe, 379g H₂O und 168g 75%ige Phosphorsäure werden bei RT zusammengegeben. Die Dichte der verdünnten Phosphorsäure in dem Ansatz beträgt 1,134 g/ml bei 20°C. Es tritt eine leichte Gasentwicklung auf, die über den gesamten Reaktionszeitraum anhält. Es wird auf 63°C erwärmt und nach 120 min eine grüne Lösung erhalten, die eine sehr geringe Trübung aufweist. Eine weitere Gasentwicklung wird nicht mehr beobachtet. Die Trübung wird durch Filtration entfernt und das Filtrat mit 30 ml H₂O₂-Lsg. (35 Gew.-%) bei 85°C versetzt. Es stellt sich eine Farbveränderung über intensiv rot zu hell rosa ein, wobei das Produkt als feiner Feststoff mit hellrosa Farbe ausfällt. Die Ausbeute beträgt 58,0g.

### Figurenbeschreibung

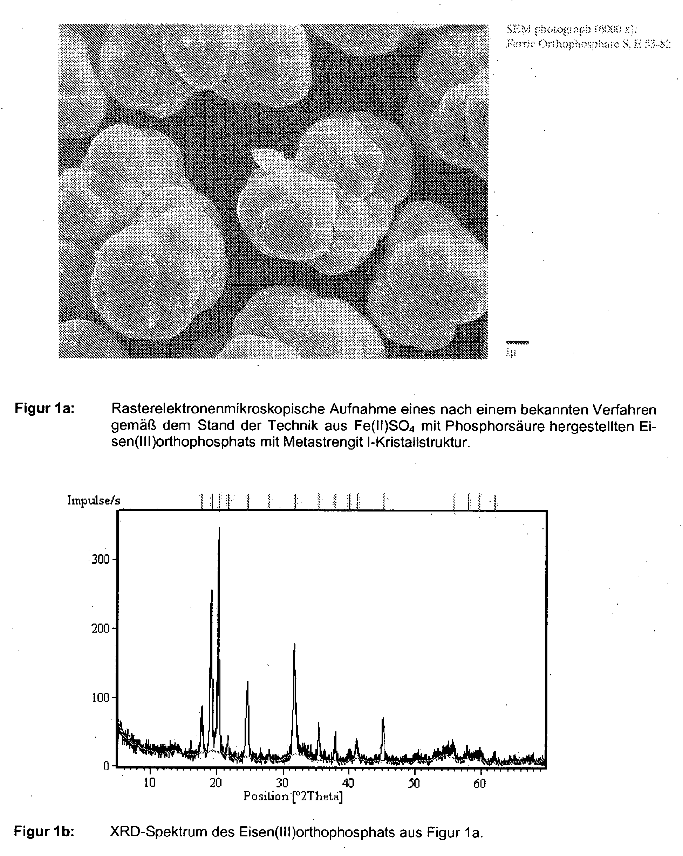

Figur 1a zeigt eine rasterelektronenmikroskopische Aufnahme eines nach einem bekannten Verfahren gemäß dem Stand der Technik aus Fe(II)SO₄ mit Phosphorsäure hergestellten Eisen(III)orthophosphats mit Metastrengit I-Kristallstruktur.
Figur 1b zeigt ein XRD-Spektrum im Winkelbereich von 5° bis 70° 2Theta des Eisen(III)orthophosphats aus Figur 1 a.

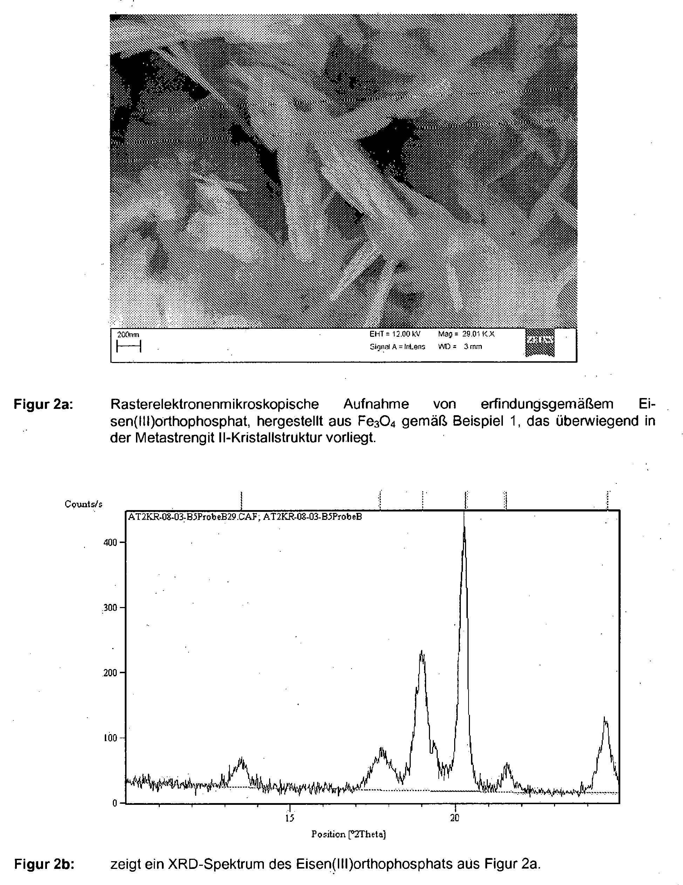

Figur 2a zeigt eine rasterelektronenmikroskopische Aufnahme von erfindungsgemäßem Eisen(III)orthophosphat, hergestellt gemäß Beispiel 1, das überwiegend in der Metastrengit II-Kristallstruktur vorliegt.
Figur 2b zeigt ein XRD-Spektrum im Winkelbereich von 10° bis 25° 2Theta des Eisen(III)orthophosphats aus Figur 2a.

## Patentansprüche

1. Verfahren zur Herstellung von Eisen(III)orthophosphat der allgemeinen Formel FePO₄ x nH₂O (n ≤ 2,5), bei dem man
a) eine Fe²⁺-Ionen enthaltende wässrige Lösung herstellt, indem man Eisen(II)-, Eisen(III)- oder gemischte Eisen(II,III)-Verbindungen, ausgewählt unter Hydroxiden, Oxiden, Oxidhydroxiden, Oxidhydraten, Carbonaten und Hydroxidcarbonaten, zusammen mit elementarem Eisen in ein Phosphorsäure enthaltendes wässriges Medium einbringt und Fe²⁺-Ionen in Lösung bringt und Fe³⁺ mit elementarem Fe (in einer Komproportionierungsreaktion) zu Fe²⁺ umsetzt,
b) Feststoffe von der phosphorsauren wässrigen Fe²⁺-Lösung abtrennt,
c) zu der phosphorsauren wässrigen Fe²⁺ -Lösung ein Oxidationsmittel zugibt, um Eisen(II) in der Lösung zu oxidieren, und Eisen(III)orthophosphat der allgemeinen Formel FePO₄ x nH₂O ausfällt.

2. Verfahren nach Anspruch 1, **dadurch gekennzeichnet, dass** man der phosphorsauren wässrigen Lösung Fällungsreagenzien zugibt, um Feststoffe aus der Lösung auszufällen und von der phosphorsauren wässrigen Fe²⁺-Lösung abzutrennen, und/oder
dass man in der phosphorsauren wässrigen Lösung gelöste Metalle elektrolytische aus der Lösung abscheidet.

3. Verfahren nach einem der vorangegangenen Ansprüche, **dadurch gekennzeichnet, dass** man die Umsetzung der oxidischen Eisenverbindungen zusammen mit elementarem Eisen in Phosphorsäure enthaltendem wässrigem Medium (Stufe a) bei einer Temperatur im Bereich von 15°C bis 90°C, vorzugsweise im Bereich von 20°C bis 75°C, besonders bevorzugt im Bereich von 25°C bis 65°C, und/oder unter intensivem Durchmischen durchführt.

4. Verfahren nach einem der vorangegangenen Ansprüche, **dadurch gekennzeichnet, dass** man die Umsetzung der Eisenverbindungen zusammen mit elementarem Eisen in Phosphorsäure enthaltendem wässrigem Medium (Stufe a) für einen Zeitraum von 1 min bis 120 min, vorzugsweise von 5 min bis 60 min, besonders bevorzugt von 20 min bis 40 min durchführt.

5. Verfahren nach einem der vorangegangenen Ansprüche, **dadurch gekennzeichnet, dass** die Konzentration der Phosphorsäure in dem wässrigen Medium 5% bis 85%, vorzugsweise 10% bis 40%, besonders bevorzugt 15% bis 30% beträgt, bezogen auf das Gewicht der wässrigen Lösung.

6. Verfahren nach einem der vorangegangenen Ansprüche, **dadurch gekennzeichnet, dass** das Oxidationsmittel, welches zugegeben wird, um Eisen(II) in der Lösung zu oxidieren, eine wässrige Lösung von Wasserstoffperoxid (H₂O₂) ist, bevorzugt mit einer Konzentration von 15 bis 50 Gew.-%, besonders bevorzugt 30 bis 40 Gew.-%.

7. Verfahren nach einem der vorangegangenen Ansprüche, **dadurch gekennzeichnet, dass** das Oxidationsmittel, welches zugegeben wird, um Eisen(II) in der Lösung zu oxidieren, ein unter Luft, reinem Sauerstoff oder Ozon ausgewähltes gasförmiges Medium ist, welches in die wässrige Lösung eingeblasen wird.

8. Verfahren nach einem der vorangegangenen Ansprüche, **dadurch gekennzeichnet, dass** das Eisen(III)orthophosphat nach dem Ausfällen von der wässrigen Lösung abgetrennt und vorzugsweise nach dem Abtrennen bei erhöhter Temperatur und/oder unter vermindertem Druck getrocknet wird, oder dass das Eisen(III)orthophosphat nach dem Ausfällen als eine wässrige Dispersion mit einem Feststoffgehalt von 1 bis 90 Gew.-% bereitgestellt wird.

## Claims

1. A process for the production of iron (III) orthophosphate of the general formula FePO₄ x nH₂O (n ≤ 2.5) in which
a) an aqueous solution containing Fe²⁺ ions is produced in that iron (II), iron (III) or mixed iron (II, III) compounds selected from hydroxides, oxides, oxide hydroxides, oxide hydrates, carbonates and hydroxide carbonates, together with elementary iron, are introduced into a phosphoric acid-bearing aqueous medium, and Fe²⁺ ions are dissolved and Fe³⁺ is reacted with elementary Fe (in a comproportionation reaction) to give Fe²⁺,
b) solids are separated from the phosphoric-acid aqueous Fe²⁺ solution,
c) an oxidation agent is added to the phosphoric-acid aqueous Fe²⁺ solution to oxidise iron (II) in the solution and iron (III) orthophosphate of the general formula FeP04 x nH20 precipitates.

2. A process according to claim 1 **characterised in that** precipitation reagents are added to the phosphoric-acid aqueous solution to precipitate solids from the solution and to separate same from the phosphoric-acid aqueous Fe²⁺ solution and/or
metals dissolved in the phosphoric-acid aqueous solution are electrolytically separated out of the solution.

3. A process according to one of the preceding claims **characterised in that** the reaction of the oxidic iron compounds is performed together with elementary iron in a phosphoric acid-bearing aqueous medium (step a) at a temperature in the range of 15°C to 90°C, preferably in the range of 20°C to 75°C, particularly preferably in the range of 25°C to 65°C, and/or with intensive thorough mixing.

4. A process according to one of the preceding claims **characterised in that** the reaction of the iron compounds is performed together with elementary iron in a phosphoric acid-bearing aqueous medium (step a) for a period of 1 min to 120 min, preferably 5 min to 60 min, particularly preferably 20 min to 40 min.

5. A process according to one of the preceding claims **characterised in that** the concentration of the phosphoric acid in the aqueous medium is 5% to 85%, preferably 10% to 40%, particularly preferably 15% to 30%, with respect to the weight of the aqueous solution.

6. A process according to one of the preceding claims **characterised in that** the oxidation agent which is added to oxidise iron (II) in the solution is an aqueous solution of hydrogen peroxide (H₂O₂), preferably in a concentration of 15 to 50% by weight, particularly preferably 30 to 40% by weight.

7. A process according to one of the preceding claims **characterised in that** the oxidation agent which is added to oxidise iron (II) in the solution is a gaseous medium which is selected from air, pure oxygen or ozone and which is blown into the aqueous solution.

8. A process according to one of the preceding claims **characterised in that** the iron (III) orthophosphate is separated from the aqueous solution after the precipitation step and is preferably dried after the separation operation at elevated temperature and/or under reduced pressure, or the iron (III) orthophosphate is prepared after the precipitation step as an aqueous dispersion with a solids content of 1 to 90% by weight.

## Revendications

1. Procédé de préparation d'orthophosphate de fer (III) de formule générale FePO₄ x nH₂O (n ≤ 2,5), dans lequel
a) on prépare une solution aqueuse contenant des ions Fe²⁺, en ce que l'on introduit dans un milieu aqueux contenant de l'acide phosphorique des composés du fer (II), du fer (III) ou du fer (II) et fer (III) mélangés, choisis parmi les hydroxydes, les oxydes, les oxyhydroxydes, les oxyhydrates, les carbonates et les hydroxycarbonates, avec du fer élémentaire, en ce que l'on met en solution des ions Fe²⁺ et en ce que l'on fait réagir Fe³⁺ avec du Fe élémentaire (dans une réaction de commutation), pour donner du Fe²⁺,
b) on sépare les matières solides de la solution aqueuse de Fe²⁺ à l'acide phosphorique,
c) on ajoute à la solution aqueuse de Fe²⁺ à l'acide phosphorique un oxydant pour oxyder le fer (II) dans la solution, et on isole par précipitation l'orthophosphate de fer (III) de formule générale FePO₄ x nH₂O.

2. Procédé selon la revendication 1, **caractérisé en ce que** l'on ajoute à la solution aqueuse à l'acide phosphorique des réactifs de précipitation pour isoler par précipitation des matières solides de la solution et les séparer de la solution aqueuse de Fe²⁺ à l'acide phosphorique, et/ou **en ce que** l'on sépare de la solution par voie électrolytique les métaux dissous dans la solution aqueuse à l'acide phosphorique.

3. Procédé selon l'une des revendications précédentes, **caractérisé en ce que** l'on met en oeuvre la réaction des composés oxydes de fer avec du fer élémentaire dans le milieu aqueux contenant de l'acide phosphorique (étape a) à une température comprise dans la plage de 15 °C à 90 °C, de préférence dans la plage de 20 °C à 75 °C, d'une manière particulièrement préférée dans la plage de 25 °C à 65 °C, et/ou sous vigoureux mélange intime.

4. Procédé selon l'une des revendications précédentes, **caractérisé en ce que** l'on met en oeuvre la réaction des composés du fer avec le fer élémentaire dans le milieu aqueux contenant de l'acide phosphorique (étape a) pendant un laps de temps de 1 minute à 120 minutes, de préférence de 5 minutes à 60 minutes, d'une manière particulièrement préférée de 20 minutes à 40 minutes.

5. Procédé selon l'une des revendications précédentes, **caractérisé en ce que** la concentration de l'acide phosphorique dans le milieu aqueux est de 5 % à 85 %, de préférence de 10 % à 40 %, d'une manière particulièrement préférée de 15 % à 30 %, par rapport au poids de la solution aqueuse.

6. Procédé selon l'une des revendications précédentes, **caractérisé en ce que** l'oxydant qui est ajouté pour oxyder le fer (II) dans la solution est une solution aqueuse de peroxyde d'hydrogène (H₂O₂), de préférence à une concentration de 15 à 50 % en poids, d'une manière particulièrement préférée de 30 à 40 % en poids.

7. Procédé selon l'une des revendications précédentes, **caractérisé en ce que** l'oxydant qui est ajouté pour oxyder le fer (II) dans la solution est un milieu gazeux choisi parmi l'air, l'oxygène pur et l'ozone, qui est insufflé dans la solution aqueuse.

8. Procédé selon l'une des revendications précédentes, **caractérisé en ce que** l'orthophosphate de fer (III) est isolé de la solution aqueuse par précipitation, et est de préférence, après séparation, séché à haute température et/ou sous pression réduite, ou **en ce que** l'orthophosphate de fer (III) est mis à disposition, après la précipitation, sous la forme d'une dispersion aqueuse ayant une teneur en extrait sec de 1 à 90 % en poids.
